# EUROPÄISCHE PATENTSCHRIFT

(11) **EP 0 671 356 B1**
(45) Veröffentlichungstag und Bekanntmachung des Hinweises auf die Patenterteilung: **21.10.1998**
(21) Anmeldenummer: 94103555.2
(22) Anmeldetag: 09.03.1994
(51) Int. Cl.: B66B 5/00, B66B 5/18, F16D 66/02

(54) **Bremsüberwachung bei einem Aufzug**
Brake monitoring for a lift
Témoin de frein pour ascenseur

(43) Veröffentlichungstag der Anmeldung: 13.09.1995
(73) Patentinhaber: THYSSEN AUFZÜGE GMBH, 73765 Neuhausen a.d.F. (DE)
(72) Erfinder: Selg, Josef, D-72644 Oberboihingen (DE); Stoll, Günter, D-72658 Bempflingen (DE)
(74) Vertreter: Raeck, Wilfrid, Dipl.-Ing.

(56) Entgegenhaltungen:
- EP-A- 0 093 657
- EP-A- 0 502 282
- EP-A- 0 535 344

## Beschreibung

Die Erfindung betrifft eine Vorrichtung zur Erfassung und Signalisierung der Funktion einer Bremsbacke und des Abnutzungsgrades des zugehörigen Bremsbelages, mit einem Schalter in einem Schaltergehäuse und einem von der Bremsbacke verstellbaren Schalterbetätigungsteil, das eine das Lüften und Schließen überwachende erste Schaltflanke und eine den zulässigen Abnutzungsgrad überwachende zweite Schaltflanke aufweist.

Mit Hilfe einer derartigen Bremsüberwachung wird bei einem Aufzug oder einem ähnlichen Gerät, z.B. Regalförderzeug, Kran usw., bei dem eine Last an Haltestationen mit einer Bremse festgehalten wird, die Sicherheit erhöht bzw. das für den Betreiber bestehende Restrisiko gemindert, das insofern vorhanden ist, als beispielsweise die Bremswirkung aus unterschiedlichen Gründen wegfallen bzw. bei Zweikreisbremsen ohne eine solche Bremsüberwachung ein unbemerkter Redundanzverlust auftreten kann. Da z.B. bei Aufzügen der Fahrkorb normalerweise nach der Fahrt über die Antriebssteuerung durch den Seilscheibenmotor bis zum Stillstand abgebremst wird, braucht diese Last an den Haltepunkten von einer Bremse nur festgehalten zu werden. Obwohl durch diese Haltefunktion normalerweise kaum ein Verschleiß des Bremsbelages eintritt, kann dennoch im Lauf der Betriebsdauer aufgrund von Notbremsvorgängen oder aufgrund von Fehlfunktionen der Bremslüftvorrichtung usw. der Bremsbelag verschleißen, so daß eine sichere Haltefunktion nicht mehr gewährleistet ist.

Um das ordnungsgemäße Lüften jeder Bremsbacke bei Aufzugsfahrten, d.h. bei Drehung der am Antrieb angebrachten Bremstrommel bzw. beim Halten des Aufzuges das Anliegen der Bremsbacke mit einem Bremsbelag von noch ausreichender Stärke an der Bremstrommel oder -scheibe zu überwachen, ist eine Vorrichtung zur Erfassung der Funktion der Bremsbacke und des Abnutzungsgrades des Bremsbelages vorgesehen, die Signale an eine zentrale Überwachungsschaltung weitergibt, und so bei ermittelten Fehlfunktionen, Redundanzverlust oder unzulässig hohem Verschleiß des Bremsbelages keine weiteren Fahrten zuläßt oder auch eine Fahrt abbricht.

Bei einer gemäß EP 0 535 344 A1 bekannten Überwachungsvorrichtung der vorbeschriebenen Art für eine zur Anwendung bei Aufzügen bestimmte Sicherheitsbremse ist an einem ortsfesten Tragteil der Bremse in der Nähe der Bremsbacke ein Mikroschalter montiert, auf dessen Schaltarm eine Anlaufrolle gelagert ist. Zusätzlich ist an der Bremsbacke als Betätigungsteil für den Schaltarm eine mit zwei Schaltflanken versehene Schaltkulisse befestigt, die unter der Voraussetzung einer sachgerechten Justage den Mikroschalter über eine ihrer Schaltflanken beim Lüften und Anlegen der Bremsbacke bezüglich der Bremsfläche und über die andere Schaltflanke beim erstmaligen Überschreiten eines zulässigen Abnutzungsmaßes des Bremsbelages betätigt. Bei Anwendung dieser Überwachungseinrichtung ergeben sich Nachteile und Probleme hinsichtlich Handhabung und Zuverlässigkeit, vor allem aufgrund der Tatsache, daß die Einrichtung zwei getrennt zu montierende und genau aufeinander auszurichtende Einzelteile, nämlich den Schalter und die als Betätigungsteil dienende Schaltkulisse, umfaßt.

Zur Erzielung einer sicheren Überwachung müssen aufgrund des geringen Verstellweges, den die Bremsbacke zwischen ihrer Brems- und Lüftposition zurücklegt, der Schalter und die Kulisse äußerst genau zueinander justiert werden und zwar in allen Raumachsen, damit auf dem nur einige Zehntelmillimeter betragenden Backenverstellweg die Schaltfunktion ausgelöst wird. Da die Kulisse getrennt vom Schalter an der Bremsbacke befestigt ist, müssen beim Nachstellen der Bremsbacke Schalter und Kulisse jedesmal wieder in allen Raumachsen sehr sorgfältig justiert werden. Tritt der Fall ein, daß sich Teile der Bremsanlage im Laufe des Betriebes gegeneinander etwas verschieben, wovon auch die Lagebeziehung zwischen Schalter und Kulisse aufgrund ihrer getrennten Montage betroffen sein kann, dann besteht aufgrund der sehr kleinen Schaltwege Gefahr, daß der Schalter durch die Kulisse zu früh oder zu spät betätigt wird oder bei vergrößerter Distanz die Kulisse den Schalter überhaupt nicht mehr steuert.

Der Erfindung liegt die Aufgabe zugrunde, eine Vorrichtung der eingangs genannten Art so zu verbessern, daß sie sich als kompakte Einheit besonders leicht montieren läßt und sowohl bei der Erstmontage als auch z.B. beim Nachstellen einer Bremsbacke besonders einfach und genau justieren läßt und außerdem einfache Funktionsüberprüfungen im Zuge von Wartungsarbeiten ermöglicht und daß die Vorrichtung auch nach kleinen Veränderungen der Lagebeziehung zwischen den Komponenten der Bremsanlage sicher funktioniert.

Diese Aufgabe wird erfindungsgemäß dadurch gelöst,
- daß das Schalterbetätigungsteil mit den beiden Schaltflanken innerhalb des Schaltergehäuses angeordnet und an einem aus dem Gehäuse herausragenden, ständig gegen die Bremsbacke vorgespannten Ende von der Bremsbacke verstellbar ist,
- und daß für über die zweite Schaltflanke hinausgehende Verstellbewegungen des Schalterbetätigungsteils im Schaltergehäuse ein Auslaufweg vorgesehen ist.

Diese Lösung hat den Vorteil, daß sämtliche Schalterelemente wie Schalter, Betätigungsteil, Gehäuse zu einer kompakten Montageeinheit zusammengefaßt sind. Diese Einheit wird mittels einfacher Maßnahmen z.B. auf einer Bremsstange oder einem anderen geeigneten ortsfesten Bauteil zunächst so vormontiert, daß das freie Ende des Schalterbetätigungsteiles die Bremsbacke berührt. Diese Vormontage wird im Beispiel eines vertikal verstellbaren Schalterbetätigungteils so durchgeführt, daß sein freies Ende eine an der Bremsbacke angeordnete Schräge berührt. Auschließend braucht die Einheit in Abstimmung auf ihre Überwachungsfunktion nur noch durch einfaches Verschieben z.B. parallel zum Verstellweg eines längsgeführten Schalterbetätigungsteils justiert und fixiert zu werden. Diese Justage erfordert auch bei Nachstellen der Bremsbacke nur wenig Aufwand und handwerkliches Geschick. Die kompakte Einheit kann sehr einfach mit üblichen Mitteln gegen unbeabsichtigtes Verstellen durch äußere Einflüsse sowie gegen Spritz- und Schwallwasser geschützt werden.

Der im Gehäuse für den Schaltstift vorgesehene Auslaufweg nach der einem zulässigen Abnutzungsmaß zugeordneten zweiten Schaltflanke stellt sicher, daß der Schalter selbst bei einer über ein zulässiges Maß hinausgehenden Abnutzung des Bremsbackenbelages nicht zerstört werden kann bzw. die Bewegungsfreiheit der Bremsbacke nicht eingeschränkt wird.

Da das freie Ende des Schalterbetätigungsteiles durch Gewichts- und/oder Federmittel vorgespannt ist, bleibt es mit der Bremsbacke ständig in Berührung. Die Überwachungsfunktion des Schalters wird durch während des Betriebs eventuell auftretende kleine Lageänderungen der Bremskomponenten zueinander, sofern sich diese nicht in der Bewegungsrichtung des Schalterbetätigungsteiles abspielen, nicht beeinträchtigt. In der Schalter, Schaltergehäuse und Schalterbetätigungsteil integrierenden erfindungsgemäßen Montageeinheit, die als solche an einem beliebigen ortsfesten Tragteil montierbar ist, bleiben die Schaltkomponenten in der für ihre Funktion vorbestimmten Lagebeziehung.

Ein am Schalterbetätigungsteil angebrachter Anschlag stellt sicher, daß das Schalterbetätigungsteil vor der Montage aufgrund seiner Vorspannung nicht aus dem Gehäuse herausfällt.

Das Schalterbetätigungsteil kann als ein in seiner Längsachse verschiebbarer Schaltstift ausgeführt sein oder auch als eine Platte, die um ein Lager im Schaltergehäuse verschwenkbar ist und auf ihrem Schwenkweg mit geeigneten Abschnitten ihres Umfanges Schaltflanken bildet.

Die Anordnung von Schaltflanken unter einem Längsabstand ist insofern vorteilhaft, als dieser aufgrund des linearen Zusammenhanges zwischen den Bewegungen von Schaltstift und Bremsbelag genau auf ein gewünschtes oder zulässiges Abnutzungsmaß der Bremsbacke abgestimmt werden kann. Mittels bevorzugter senkrechter Schaltflanken auf dem Schalterbetätigungsteil lassen sich besonders kurze Schaltzeiten erzielen.

Durch Verwendung einer Lichtschranke als Schalter werden die Schaltflanken des Schaltstiftes berührungslos bzw. verschleißfrei und hysteresefrei abgetastet. Aufgrund ihrer geringen geometrischen Dimensionen läßt sich eine sehr kompakte Bauweise der Schaltereinheit erzielen. Zudem ermöglicht die Verwendung von Lichtschranken eine empfindliche, sichere Abtastung von sehr geringen Bewegungen der Bremsbacke, wobei eine staubfrei und/oder feuchtigkeits- bzw. spritzwassergeschützt gekapselte Unterbringung im Schaltergehäuse hohe Funktionssicherheit und lange Lebensdauer gewährleisten.

Die einem weiteren Vorschlag entsprechende Verwendung von Initiatoren bzw. induktiven Näherungsschaltern stellt eine Alternative zu der zuvor angeführten Lichtschranke dar.

Durch zusätzlichen Einbau optischer Signalmittel in das Schaltergehäuse erhält man einerseits eine ständige Kontrollmöglichkeit über das Funktionieren des Schalters, so daß z.B. bei einer Wartung der Bremse das Lüften und Schließen der Bremse einfach durch Leuchtsignale kontrolliert werden kann. Andererseits wird der Vorgang der Justierung vereinfacht, da zum Justieren der Vorrichtung die Schaltereinheit der an der Bremsscheibe anliegenden Bremsbacke soweit angenähert wird, bis das z.B. als Schaltstift ausgeführte Schalterbetätigungsteil soweit eingedrückt ist, daß zum ersten Mal ein Leuchtsignal auftritt.

Die Schaltfunktion kann so gewählt sein, daß bei Lichtdurchgang (nicht unterbrochene Lichtschranke) ein Leuchtsignal entsteht. Der Schaltstift kann eine Aussparung zur Erzeugung der Schaltflanken enthalten. Diese Variante wird bevorzugt, da bei einer Störung der Lichtschranke (Defekt oder Stromausfall) das gleiche Signal (gleiche Information) vorhanden ist wie beim Überschreiten der maximal zulässigen Bremsbelagabnutzung, was zur Folge haben soll, daß der Aufzug sich nicht in Bewegung setzen kann.

Es liegt im Rahmen der Erfindung, daß die Lichtschranke oder ein von ihr betriebener Schalter das Signal an die zentrale Überwachungschaltung bei Unterbrechung des Lichtweges in der Lichtschranke liefert.

Ein Ausführungsbeispiel der Einrichtung nach der Erfindung ist nachfolgend anhand der Zeichnungen näher erläutert. Es zeigen
- Fig. 1: eine Teilansicht einer Bremstrommel mit einer an ihrem Umfang anliegenden schwenkbaren Bremsbacke sowie einer bezüglich der Bremsbacke ortsfesten Einrichtung gemäß der Erfindung,
- Fig. 2: eine Ansicht des Deckels eines zur erfindungsgemäßen Einrichtung gehörenden Schaltergehäuses in Richtung der Pfeile A-A in Fig. 3,
- Fig. 3: einen senkrechten Längsschnitt durch das Schaltergehäuse der Einrichtung nach der Erfindung,
- Fig. 4: eine Draufsicht auf das offene Unterteil des Schaltergehäuses der Einrichtung nach der Erfindung in Richtung der Pfeile B-B in Fig. 3 und
- Fig. 5: eine Teildarstellung der Bremsbacke aus Fig. 1 mit einem an ihrer einen Seite anliegenden Schaltstift in verschiedenen Funktionsstellungen:
I: Bremsbacke gelüftet,
II: neue Bremsbacke anliegend
III: noch erlaubte Belagsdicke
IV: nicht mehr erlaubte Belagsdicke.

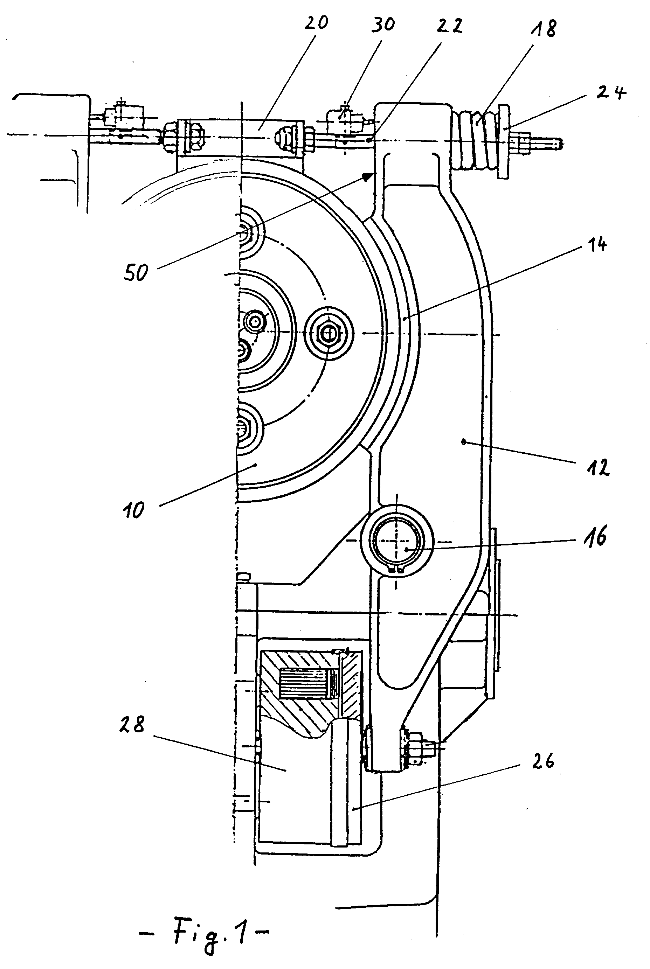

Entsprechend Fig. 1 liegt am Umfang einer z.B. zu einer Aufzugsanlage gehörenden Bremstrommel 10 eine Bremsbacke 12 mit einem der Bremstrommel 10 angepaßten Bremsbelag 14 an. Die Bremsbacke 12 ist zwischen ihren Enden auf einer ortsfesten Achse 16 schwenkbar gelagert und wird normalerweise durch eine Bremsfeder 18 an die Bremstrommel 10 angedrückt gehalten. An einem ortsfesten Tragteil 20 ist eine Bremsstange 22 befestigt, die sich durch eine nicht gezeigte Öffnung im oberen Ende der Bremsbacke 12 erstreckt und an der die an der Bremsbacke 12 anliegende Bremsfeder 18 mittels einer verstellbaren Haltescheibe 24 abgestützt ist. Um die Bremsbacke 12 aus der in Fig. 1 gezeigten Haltestellung zu lüften und mit ihrem Bremsbelag 14 von der Bremstrommel 10 abzuheben, ist an ihrem unteren Ende eine Metallplatte 26 befestigt, die von einem Elektromagneten 28 angezogen werden kann. Der erfindungsgemäße Schalter kann in Form einer integrierten Montageeinheit 30 gemäß Fig. 1 mit Hilfe beliebiger geeigneter Mittel auf der Bremsstange 22 befestigt sein.

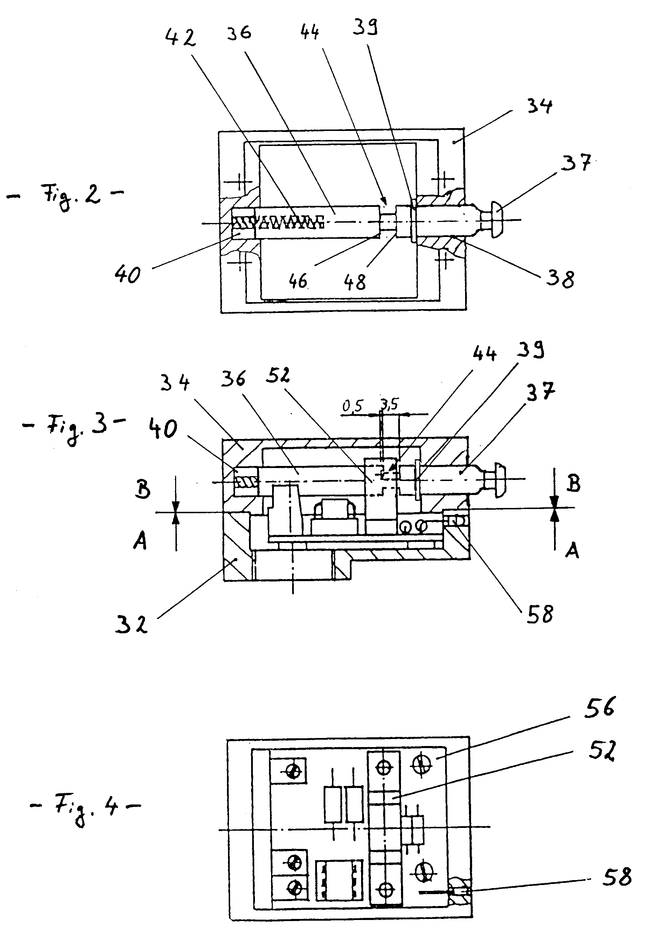

Entsprechend Fig. 2 bis 4 umfaßt die Montageeinheit 30 ein Schaltergehäuse bestehend aus einem Unterteil 32 mit einem Deckel 34. Im Deckel 34 ist ein als Schaltstift ausgeführtes Schalterbetätigungsteil 36 verschiebbar geführt, das beim gezeigten Ausführungsbeispiel einen runden Querschnitt aufweist und mit seinem vorderen Ende aus dem Schaltergehäuse 32, 34 herausragt.

Der Schaltstift 36 ist in einer entsprechend dimensionierten vorderen Öffnung 38 sowie an seinem rückwärtigen Ende in einem durch eine Blindbohrung erzeugten Auslaufweg 40 des Deckels 34 geführt und beispielsweise mit Hilfe einer am Boden des Auslaufweges 40 abgestützten Druckfeder 42, die sich in eine Blindbohrung des Schaltstiftes 36 erstreckt, in Richtung seines aus dem Schaltergehäuse 32, 34 herausragenden Endes 37 vorgespannt. Ein Anschlag 39 begrenzt im Zusammenwirken mit dem Schaltergehäuse 32, 34 den Verschiebeweg des Schaltstiftes 36.

Der Schaltstift 36 enthält eine umlaufende Ausnehmung 44, durch die zwei senkrechte Schaltflanken 46, 48 definiert sind. Für die axiale Länge der Ausnehmung 44 ist in Fig. 3 als Beispiel ein Maß von 3,5 mm vorgesehen. Die Montageeinheit 30 wird entsprechend Fig. 1 auf der Bremsstange 22 so montiert, daß das freie Ende 37 des Schaltstiftes 36 mit Federvorspannung an einer beliebigen quer zum Verstellhub verlaufenden Seitenfläche 50 der Bremsbacke 12 anliegt. Die Schaltflanken 46, 48 wirken mit einem quer durch die Ausnehmung 44 des Schaltstiftes 36 verlaufenden Lichtstrahl einer Lichtschranke 52 zusammen, die im Unterteil 32 des Schaltergehäuses ortsfest angeordnet ist und der jeweiligen Position der Bremsbacke 12 entsprechende Signale erzeugt. Außer der Lichtschranke 52 sind im Schaltergehäuse 32, 34 Klemmanschlüsse 54 zur Stromversorgung und zur Weitergabe der vom Schalter erzeugten Signale an die zentrale Überwachungsschaltung sowie eine Schaltungsplatine 56 untergebracht.

Das Schaltergehäuse 32, 34 enthält außerdem Signalmittel, beispielsweise eine oder mehrere LED 58, um die an die zentrale Überwachungsanlage weitergegebenen Signale auch am Schaltergehäuse 32, 34 sicht- und kontrollierbar werden zu lassen.

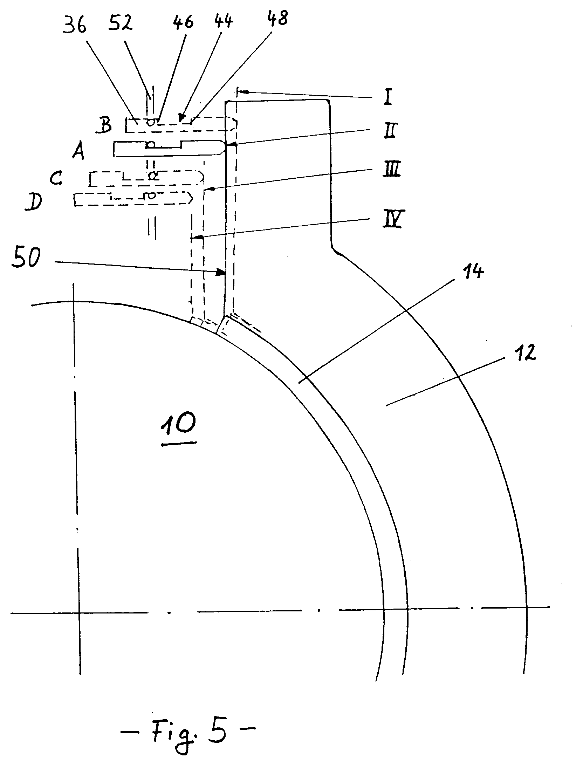

In Fig. 5 ist das obere Ende einer Bremsbacke 12 in an der Bremstrommel 10 anliegender Halteposition mit ausgezogenen Linien unter der Annahme dargestellt, daß sie einen erneuerten Bremsbelag 14 trägt oder mit einem teilweise abgenutzten Bremsbelag in der Weise nachgestellt worden ist, daß in Fig. 1 die Metallplatte 26 bezüglich des Magneten 28 einen vorbestimmten Mindestabstand aufweist, um die Bremse zu lüften. Dieser Ausgangs-Halteposition der Bremsbacke 12 bzw. deren Seitenfläche 50 entspricht die Position A des unter Federvorspannung stehenden Schaltstiftes 36, dessen ihn umgebendes Schaltergehäuse 32, 34 in Fig. 5 der Übersicht halber nicht gezeigt ist. Zur Verdeutlichung ist zudem die Ausnehmung 44 gegenüber der in Fig. 2 oder 3 verlängert dargestellt.

Mit Bezug auf die ortsfeste Lichtschranke 52, die in Fig. 5 für sämtliche Schaltstiftpositionen A bis D schematisch gezeigt ist, befindet sich der Schaltstift 36 in der Position A mit seiner ersten Schaltflanke 46 in ihrer unmittelbaren Nähe. Da die Lichtschranke 52 im Bereich der Ausnehmung 44 nicht unterbrochen ist, gibt sie direkt oder über einen Signalverstärker ein Signal an die zentrale Überwachungsanlage ab und schaltet gleichzeitig die LED-Kontrolleuchte 58 ein, um anzuzeigen, daß die Bremsbacke 12 ihre vorbestimmte Halteposition einnimmt.

In der obersten mit unterbrochenen Linien eingezeichneten Position B des Schaltstiftes 36 ist die Bremsbacke 12 durch den Magneten 26 z.B. für eine Fahrt verschwenkt bzw. gelüftet worden, so daß ihre seitliche Betätigungsfläche 50 nun dem mit unterbrochenen Linien gezeigten Verlauf entspricht. Da der unter Federvorspannung stehende Schaltstift der Bremsbackenbewegung folgt, wird die Lichtschranke 52 durch die erste Schaltflanke 46 unterbrochen und diese Zustandsänderung zu einer entsprechenden Signalabgabe an die zentrale Überwachungsanlage ausgenutzt. Gleichzeitig wird die LED-Kontrolleuchte 58 ausgeschaltet, um anzuzeigen, daß die Bremsbacke ordnungsgemäß gelüftet ist.

Zweckmäßigerweise wird im Zuge einer Neueinstellung der Bremsbacke 12 aufgrund eines neuen oder teilweise abgenutzten Bremsbelages 14 die Montageeinheit 30 gemäß Fig. 1 auf der Bremsstange 22 so justiert, daß der Verschiebeweg des Schaltstiftes 36 zwischen Position A und B in diesem Beispiel etwa 0,5 mm beträgt, wobei dieses Maß dem tatsächlich nur geringen Lüftungshub der Bremsbacke proportional ist.

Die Position C des Schaltstiftes 36 veranschaulicht den Zustand, wenn die Bremsbacke 12 mit einer gerade noch zulässigen Restdicke des Bremsbelages 14 am Umfang der Bremstrommel 10 anliegt, wobei sich in dieser Position C die Ausnehmung 44 des Schaltstiftes 36 noch immer im Bereich der Lichtschranke 52 befindet.

Die Position D des Schaltstiftes 36 entspricht einem Zustand, der vorliegen kann, wenn der Bremsbelag 14 über ein zulässiges Maß abgenutzt worden ist, was zur Folge hat, daß die Lichtschranke 52 durch die zweite Schaltflanke 48 unterbrochen wird.

Ein Auslaufweg 40 für den Schaltstift 36 ist für den Fall notwendig, wenn während einer Fahrt beispielsweise durch eine Fehlfunktion des Magneten 28 die gelüftete Bremsbacke 12 wieder in die Haltestellung zurückgeht und an der Bremstrommel 10 schleift. Je nach Auslegung bzw. Programmierung der zentralen Überwachungsschaltung nach bestimmten Sicherheitsbedingungen kann z.B. aufgrund dieses Fehlers bei nur einer Bremsbacke 12 das vom Schalter abgegebene Signal bewirken, daß kein Nothalt ausgelöst, sondern die Fahrt noch bis zum Zielpunkt fortgesetzt wird. Sollte in diesem Fall eine besonders lange Fahrt vorliegen, besteht die Gefahr, daß der Bremsbelag 14 über das vorbestimmte zulässige Abnutzungsmaß hinaus abgetragen und der Schaltstift 36 auch über die Position D (Fig. 5) hinaus verschoben wird. Dabei stellt der Auslaufweg 40 sicher, daß der Schaltstift 36, das Schaltergehäuse 32, 34 und der Schalter nicht zerstört werden.

Da bei der beschriebenen Ausführungsform der gesamte Bremsbackenweg und die jeweilige Bremsbackenstellung mit Hilfe einer einzigen kompakten Schaltereinheit permanent überwacht werden, gestalten sich die Einrichtung und Durchführung einer Bremsüberwachung, insbesondere unter Berücksichtigung der unkomplizierten Montier- und Justierbarkeit, besonders einfach und kostengünstig.

Im Rahmen der Erfindung gibt es sowohl für die Form und Anbringungsart des Schalters als auch des Schalterbetätigungsteiles 36 verschiedenartige Möglichkeiten. So kann das Schalterbetätigungsteil 36 von der Bremsbacke 12 horizontal oder z.B. über eine Schräge vertikal betätigt oder auch um eine Lagerstelle geschwenkt werden. Ebenso kann zur Erzeugung der beiden Schaltflanken 46, 48 am Schaltstift 36 eine Ausnehmung an einer Seite des Schaltstiftes 36 angeordnet oder auch als umlaufende Nut ausgebildet sein. Der Abstand der beiden Schaltflanken voneinander kann z.B. dadurch verstellbar gemacht werden, daß das Schalterbetätigungsteil aus zwei zueinander verstellbaren und danach fixierbaren Einzelteilen besteht. Statt einer Aussparung am Schalterbetätigungsteil 36, die eine Lichtschranke 52 freigibt, kann auch ein Wulst, Vorsprung oder eine Fahne am Schaltteil 36 angebracht sein, um z.B. eine Lichtschranke 52 abzudecken. Ferner ist ein um ein im Schaltergehäuse 32, 34 angeordnetes Lager verschwenkbares Schalterbetätigungsteil denkbar, das als längliche Platte ausgeführt ist und wie eine Schranke den Lichtweg in der Lichtschranke unterbricht, wobei hier die Ober- und Unterkante dieses Schalterbetätigungsteiles die Schaltflanken bilden und der Abstand von Ober- bis Unterkante dem zulässigen Abnutzungsmaß der Bremsbacke 12 proportional sein kann.

## Patentansprüche

1. Vorrichtung zur Erfassung und Signalisierung der Funktion einer Bremsbacke und des Abnutzungsgrades des zugehörigen Bremsbelages, mit einem Schalter in einem Schaltergehäuse und einem von der Bremsbacke verstellbaren Schalterbetätigungsteil, das eine das Lüften und Schließen der Bremsbacke überwachende erste Schaltflanke und eine das zulässige Abnutzungsmaß des Bremsbelages überwachende zweite Schaltflanke aufweist,
**dadurch gekennzeichnet,**
- daß das Schalterbetätigungsteil (36) mit den beiden Schaltflanken (46, 48) innerhalb des Schaltergehäuses (32, 34) angeordnet und an einem aus dem Gehäuse (32, 34) herausragenden, ständig gegen die Bremsbacke vorgespannten Ende (37) von der Bremsbacke (12) verstellbar ist,
- und daß für über die zweite Schaltflanke (48) hinausgehende Verstellbewegungen des Schalterbetätigungsteiles (36) im Schaltergehäuse (32, 34) ein Auslaufweg (40) vorgesehen ist.

2. Vorrichtung nach Anspruch 1, dadurch gekennzeichnet, daß das Schalterbetätigungsteil (36) durch Gewichts- oder Federmittel in Richtung seines aus dem Schaltergehäuse (32, 34) herausragenden Endes (37) vorgespannt ist.

3. Vorrichtung nach Anspruch 1 oder 2, dadurch gekennzeichnet, daß das Schalterbetätigungsteil (36) aus einem Schaltstift oder einer länglichen Schaltplatte besteht und im Schaltergehäuse (32, 34) längsgeführt ist.

4. Vorrichtung nach einem der vorhergehenden Ansprüche, dadurch gekennzeichnet, daß die Schaltflanken (46, 48) auf dem Schalterbetätigungsteil (36) unter Längsabstand zueinander angeordnet sind und entgegengesetzte Schalterfunktionen erzeugen.

5. Vorrichtung nach einem der vorhergehenden Ansprüche, dadurch gekennzeichnet, daß den Schaltflanken (46, 48) des Schalterbetätigungsteiles (36) zur Ausführung des Schaltvorganges eine im Schaltergehäuse (32, 34) vorgesehene Lichtschranke (52) zugeordnet ist.

6. Vorrichtung nach einem der Ansprüche 1 bis 4, dadurch gekennzeichnet, daß zur Ausführung des Schaltvorganges im Schaltergehäuse (32, 34) angeordnete Initiatoren bzw. induktive Näherungsschalter sowie ein damit zusammenwirkendes auf dem Schalterbetätigungsteil (36) angebrachtes, profiliertes Metallstück vorgesehen sind.

7. Vorrichtung nach einem der vorhergehenden Ansprüche, dadurch gekennzeichnet, daß das Schaltergehäuse (32, 34) zusätzlich vom Schalter betätigbare, insbesondere optische Signalmittel (58) aufweist.

8. Vorrichtung nach einem der vorhergehenden Ansprüche, dadurch gekennzeichnet, daß die Schaltflanken (46, 48) durch Begrenzungen einer Ausnehmung im Schalterbetätigungsteil (36) gebildet sind, deren axiale Länge einem vorbestimmten oder zulässigen Abnutzungsmaß des Bremsbelages (14) proportional ist.

9. Vorrichtung nach einem der vorhergehenden Ansprüche, dadurch gekennzeichnet, daß die Schaltflanken (46, 48) durch Begrenzungen einer auf dem Schalterbetätigungsteil (36) angeordneten Erhebung oder Schaltfahne gebildet sind, deren axiale Länge einem zulässigen Abnutzungsmaß des Bremsbelages (14) proportional ist.

10. Vorrichtung nach einem der vorhergehenden Ansprüche, dadurch gekennzeichnet, daß der Abstand der Schaltflanken verstellbar ist.

11. Vorrichtung nach einem der vorhergehenden Ansprüche, dadurch gekennzeichnet, daß das Schalterbetätigungsteil aus zwei zueinander verstellbaren Einzelteilen zusammengesetzt ist.

12. Verfahren zur Überwachung einer sich nicht selbst nachstellenden Bremse, die mindestens eine Bremsbacke aufweist, dadurch gekennzeichnet, daß die Erfassung und Signalisierung des Lüftens und Schließens der Bremsbacke (12) und des Abnutzungsgrades des zugehörigen Bremsbelages (14) mit einer leicht montier- und justierbaren Schaltereinheit durchgeführt wird, die ein in einem Gehäuse geführtes, mit mindestens zwei Schaltflanken versehenes und mit seinem freien Ende ständig gegen die Bremsbacke vorgespanntes Schalterbetätigungsteil enthält, wobei das Lüften und Schließen der Bremsbacke durch die Betätigung des Schalters über eine Schaltflanke und die Abnutzung des Bremsbelages durch die Betätigung des Schalters über die zweite Schaltflanke überwacht wird.

## Claims

1. Device for detecting and signalizing the function of a brake block and the degree of wear of the corresponding brake lining, comprising a switch in a switch housing and a switch actuation member adjustable by means of the brake block, the switch actuation member comprising a first switching flank monitoring the release and the closing of the brake block and a second switching flank monitoring the allowable degree of wear of the brake lining,
**characterized in** that
- the switch actuation member (36) is arranged with the two switching flanks (46, 48) within the switch housing (32, 34) and is adjustable by means of the brake block (12) at an end (37) protruding from the housing (32, 34) and continuously biased against the brake block, and
- for adjustment movements of the switch actuation member (36) exceeding the second switching flank (48) a runout path (40) is provided in the switch housing (32, 34).

2. Device according to claim 1, characterized in that the switch actuation member (36) is biased in the direction of its end (37) protruding from the switch housing (32,34) by means of weight- or spring-means.

3. Device according to claim 1 or claim 2, characterized in that the switch actuation member (36) consists of a switch pin or a longish switch plate and is longitudinally guided in the switch housing (32, 34).

4. Device according to any one of the preceding claims, characterized in that the switching flanks (46, 48) are arranged on the switch actuation member (36) in longitudinally spaced relationship to one another and generate opposite switch functions.

5. Device according to any one of the preceding claims, characterized in that corresponding to the switching flanks (46, 48) of the switch actuation member (36) a light barrier (52) is provided in the switch housing (32, 34) for effecting the switching process.

6. Device according to any one of the claims 1 to 4, characterized in that it is provided with initiators or inductive proximity switches arranged in the switch housing (32, 34) and a therewith cooperating profiled metal member mounted on the switch actuation member (36).

7. Device according to any one of the preceding claims, characterized in that the switch housing (32, 34) additionally comprises signal means, especially optical signal means (58), actuable by means of the switch.

8. Device according to any one of the preceding claims, characterized in that the switching flanks (46, 48) are formed by boundaries of a recess in the switch actuation member (36), the axial length of which is proportional to a predetermined or allowable degree of wear of the brake lining (14).

9. Device according to any one of the preceding claims, characterized in that the switching flanks (46, 48) are formed by boundaries of an elevation or a switching flag arranged on the switch actuation member (36), the length of which is proportional to an allowable degree of wear of the brake lining (14).

10. Device according to any one of the preceding claims, characterized in that the spacing of the switching flanks is adjustable.

11. Device according to any one of the preceding claims, characterized in that the switch actuation member is made up of two component parts adjustable with respect to one another.

12. Method for monitoring a non-self-adjusting brake comprising at least one brake block, characterized in that the detecting and signalizing of the release and the closing of the brake block (12) and of the degree of wear of the corresponding brake lining (14) is performed with an easily mountable and adjustable switch unit comprising a switch actuation member guided in a housing, provided with at least two switching flanks and continuously biased against the brake block with its free end, the release and closing of the brake block being monitored by the actuation of the switch via a switching flank, and the wear of the brake lining being monitored by the actuation of the switch via the second switching flank.

## Revendications

1. Dispositif pour la saisie et la signalisation du fonctionnement d'une mâchoire de frein et du degré d'usure de la garniture de frein correspondante, comprenant un commutateur logé dans un boîtier de commutateur et une pièce d'actionnement du commutateur mobile sous l'action de la mâchoire de frein, pièce qui présente un premier flanc de contact surveillant la ventilation et la fermeture de la mâchoire de frein et un second flanc de contact surveillant la mesure d'usure admissible de la garniture de frein,
caractérisé en ce que
- la pièce d'actionnement (36) du commutateur munie des deux flancs de contact (46, 48) est disposée à l'intérieur du boîtier de commutateur (32, 34) et peut être déplacée par la mâchoire de frein (12) à une extrémité (37) en précontrainte constante contre la mâchoire de frein et faisant saillie du boîtier (32, 34),
- et en ce que pour les déplacements de la pièce d'actionnement (36) du commutateur au-delà du second flanc de contact (48), une course de sortie (40) est prévue dans le boîtier de commutateur (32, 34).

2. Dispositif selon la revendication 1, caractérisé en ce que la pièce d'actionnement (36) du commutateur est précontrainte en direction de son extrémité (37) faisant saillie du boîtier de commutateur (32, 34) sous l'action d'un ressort ou d'un poids.

3. Dispositif selon la revendication 1 ou 2, caractérisé en ce que la pièce d'actionnement (36) du commutateur se compose d'une tige de contact ou d'une plaque de contact allongée et en ce qu'elle est guidée dans le sens de la longueur à l'intérieur du boîtier de commutateur (32, 34).

4. Dispositif selon l'une des revendications précédentes, caractérisé en ce que les flancs de contact (46, 48) sont disposés sur la pièce d'actionnement (36) du commutateur en respectant une distance entre eux dans le sens de la longueur et génèrent des fonctions opposées du commutateur.

5. Dispositif selon l'une des revendications précédentes, caractérisé en ce que les flancs de contact (46, 48) de la pièce d'actionnement (36) du commutateur sont associés à une barrière lumineuse (52) prévue dans le boîtier de commutateur (32, 34) en vue d'établir le contact.

6. Dispositif selon l'une des revendications 1 à 4, caractérisé en ce qu'en vue d'établir le contact, il est prévu des commutateurs capacitifs ou des capteurs de proximités inductifs disposés dans le boîtier de commutateur (32, 34) ainsi qu'une pièce métallique profilée placée sur la pièce d'actionnement (36) du commutateur pour une coopération commune.

7. Dispositif selon l'une des revendications précédentes, caractérisé en ce que le boîtier de commutateur (32, 34) présente en outre des moyens de signaux (58) en particulier optiques activés par le commutateur.

8. Dispositif selon l'une des revendications précédentes, caractérisé en ce que les flancs de contact (46, 48) sont formés par des délimitations d'un évidemment dans la pièce d'actionnement (36) du commutateur dont la longueur axiale est proportionnelle à une certaine mesure d'usure prédéterminée ou admise de la garniture de frein (14).

9. Dispositif selon l'une des revendications précédentes, caractérisé en ce que les flancs de contact (46, 48) sont formés par des délimitations d'une élévation ou d'une lame de contact qui sont disposées sur la pièce d'actionnement (36) du commutateur et dont la longueur axiale est proportionnelle à une mesure admissible de la garniture de frein (14).

10. Dispositif selon l'une des revendications précédentes, caractérisé en ce que la distance entre les flancs de contact est réglable.

11. Dispositif selon l'une des revendications précédentes, caractérisé en ce que la pièce d'actionnement du commutateur se compose de deux pièces individuelles réglables l'une par rapport à l'autre.

12. Procédé pour le contrôle d'un frein non auto-ajustable qui présente au moins une mâchoire de frein, caractérisé en ce que la saisie et la signalisation de la ventilation et de la fermeture de la mâchoire de frein (12) et du degré d'usure de la garniture de frein correspondante (14) sont réalisées au moyen d'un élément formant commutateur facile à monter et à ajuster qui comporte une pièce d'actionnement du commutateur guidée dans un boîtier, munie d'au moins deux flancs de contact et dont l'extrémité libre est en précontrainte constante contre la mâchoire de frein, la ventilation et la fermeture de la mâchoire de frein étant supervisées par l'actionnement du commutateur sous l'action d'un flanc de contact et l'usure de la garniture de frein par l'actionnement du commutateur sous l'action du second flanc de contact.
